# EUROPEAN PATENT SPECIFICATION

(11) **EP 4 318 518 B1**
(45) Date of publication and mention of the grant of the patent: **01.10.2025**
(21) Application number: 22885718.1
(22) Date of filing: 17.10.2022
(51) Int. Cl.: H01H 5/06, H01H 3/38, H01H 3/42, H01H 5/10, H01H 19/24

(54) **OPERATING MECHANISM OF SWITCHING DEVICE, AND SWITCHING DEVICE**
BETÄTIGUNGSMECHANISMUS EINER SCHALTVORRICHTUNG UND SCHALTVORRICHTUNG
MÉCANISME D'ACTIONNEMENT DE DISPOSITIF DE COMMUTATION, ET DISPOSITIF DE COMMUTATION

(30) Priority: 01.11.2021 CN 202111282396
(43) Date of publication of application: 07.02.2024
(73) Proprietor: Chint Low Voltage Electrical Technology Co., Ltd., Shanghai 201620 (CN)
(72) Inventor: XU, Dasheng, Shanghai (CN); LEI, Hongjian, Shanghai (CN); QIN, Zhibin, Shanghai (CN)
(74) Representative: Petraz, Gilberto Luigi
(86) International application number: PCT/CN2022/125590
(87) International publication number: WO 2023/071840

(56) References cited:
- CN-A- 104 425 147
- CN-A- 110 189 955
- CN-A- 115 188 623
- CN-U- 205 723 306
- CN-U- 207 587 608
- CN-U- 214 956 601
- CN-U- 215 869 103
- CN-U- 216 749 634
- US-A- 6 015 959

## Description

### TECHNICAL FIELD

The present invention relates to the field of low-voltage electrical appliances, in particular to an operating mechanism of a switch apparatus and a switch apparatus comprising the operating mechanism.

### BACKGROUND ART

In low-voltage power distribution systems, disconnect switches are often used to connect and disconnect circuits. In the disconnect switch, the operating mechanism is an important component, and operators manually or electrically drive the operating mechanism to move, so as to connect and disconnect the contact system of the disconnect switch.

The operating mechanism of the existing disconnect switches often has the following problems:
1. The operation speed of break-contact and make-contact is not enough, so it is easy to cause fusion welding between the moving contact and the stationary contact.
2. The structure is complex and the operating force is large.

CN10189955A and CN104425147A disclose an operating mechanism of a switch apparatus according to the preamble of claim 1.

### SUMMARY OF THE INVENTION

The objective of the present invention is to overcome the defects of the prior art, providing an operating mechanism of a switch apparatus with simple structure and fast operation speed of break-contact and make-contact; the present invention also provides a switch apparatus comprising the operating mechanism, having fast operation speed of break-contact and make-contact and high current-carrying capacity.

In order to achieve the above object, the technical scheme adopted in the present invention is as follows:
An operating mechanism of a switch apparatus comprising a transmission shaft, a cam, an operating shaft and an energy-storage spring, the transmission shaft, the cam and the operating shaft being respectively rotationally arranged, the operating shaft drivingly cooperating with the cam to drive it to rotate; the cam rotating to enable the energy-storage spring to store energy, the energy-storage spring storing energy to a maximum value at the time of the cam rotating to a dead-center position, and the energy-storage spring releasing energy to drive the cam to rotate after the cam rotating to pass through the dead-center position; the transmission shaft drivingly cooperating with the cam and being used to output a driving force to a moving contact structure of the switch apparatus; a rotational allowance being set between the cam and the transmission shaft, so that the transmission shaft remains stationary in a process of the cam rotating to the dead-center position, wherein after the cam rotates to the dead-center position, it continues to rotate through a first angle φ1, so as to contact with the transmission shaft to drive it to rotate, wherein the first angle φ1>0°.

Further, the first angle φ1 is 2°~20°.

Further, the first angle φ1 is 2°~10°.

Further, the cam and the transmission shaft cooperate with each other by means of at least one group of first transmission structures; each group of the first transmission structures comprises a first cooperating portion and a second cooperating portion, the first cooperating portion comprises a first stopping block and a second stopping block arranged at intervals opposite to each other, and the second cooperating portion is arranged between the first stopping block and the second stopping block and cooperates with the first stopping block and the second stopping block, respectively; of both the cooperating portion and the second cooperating portion in each group of the first transmission structures, one is disposed on the cam and another is disposed on the transmission shaft.

Further, the first cooperating portion is disposed on the cam 3, the first stopping block is a first cam face, the second stopping block is a second cam face; the second cooperating portion is disposed on the transmission shaft, which is a transmission shaft boss.

Further, rotating axes of the cam and the transmission shaft coincide; the cam comprises a cam-driving end disposed at one end of its axial direction, and the two radial ends of the cam-driving end are each provided with one first cooperating portion; a convex ring disposed coaxially with the cam is arranged between the two first cooperating portions, and a first axle hole is set in the middle of the convex ring; the transmission shaft comprises a transmission shaft-cooperated end disposed at one end of its axial direction, and two radial ends of the transmission shaft-cooperated end are each provided with one second cooperating portion; a middle of the transmission shaft-cooperated end is provided with a transmission shaft-cooperated hole set coaxially with the transmission shaft, and a middle of the transmission shaft-cooperated hole is provided with a transmission shaft post coaxially disposed with it; the convex ring is rotationally inserted in the transmission shaft-cooperated hole, and the transmission shaft post is rotationally inserted in the first axle hole and the two first cooperating portions drivingly cooperate with the two second cooperating portions, respectively.

Further, a first free path is provided between the operating shaft and the cam; the operating shaft drives the cam to rotate to the dead-center position, and the cam covers the first free path relative to the operating shaft after rotating by the dead-center position.

Further, the operating shaft and the cam drivingly cooperate with each other by means of a second transmission structure; the second transmission structures comprises a third cooperating portion and a fourth cooperating portion, the third cooperating portion comprises a third stopping block and a fourth stopping block arranged at intervals opposite to each other, and the fourth cooperating portion is arranged between the third stopping block and the fourth stopping block and cooperates with the third stopping block and the fourth stopping block, respectively; of both the third cooperating portion and the fourth cooperating portion one is disposed on the operating shaft and the other is disposed on the cam.

Further, the third cooperating portion is disposed on the cam, the third stopping block is a third cam face, the fourth stopping block is a fourth cam face; the fourth cooperating portion is disposed on the operating shaft, which is an operating shaft-driving portion.

Further, rotating axes of the operating shaft and the cam are arranged at intervals parallel to each other; the operating shaft comprises an operating shaft body, the operating shaft-driving portion is disposed on the operating shaft body and is offset toward the cam.

Further, the two axial ends of the cam drivingly cooperate with the operating shaft and the transmission shaft, respectively.

Further, the operating mechanism comprises two energy-storage springs, and the two energy-storage springs are centrally symmetrically arranged with a rotating axis of the cam.

Further, the operating mechanism further comprises a mechanism housing, the mechanism housing comprises a housing bottom seat and a housing base oppositely cooperating with each other, the transmission shaft is rotationally disposed on the housing bottom seat, the cam is rotationally disposed between the housing base and the transmission shaft; the operating shaft is rotationally disposed on the housing base, of the energy-storage spring, one end is rotationally disposed on the housing bottom seat, and another end cooperates with the cam.

A switch apparatus comprising the operating mechanism.

Of the operating mechanism of a switch apparatus according to the present invention the cam rotates by the dead-center position, then it is necessary to continue to rotate through a first angle φ1, so as to contact with the transmission shaft and drive it to rotate, that can effectively accelerate the rotation of the cam in the early stage of the energy-storage spring releasing energy, thereby increasing the rotation speed of the transmission shaft, conducing to an increase in operation speed of break-contact and make-contact and improving the current-carrying capacity of the switch apparatus.

In addition, the rotating axes of the transmission shaft and the cam are arranged at intervals parallel to each other, such structure is conducive to a decrease in the operating force of the transmission shaft.

The switch apparatus according to the present invention comprises the operating mechanism, the operating mechanism increases the operation speed of break-contact and make-contact of the switch apparatus, and improves the current-carrying capacity of the switch apparatus.

### BRIEF DESCRIPTION OF THE DRAWINGS

FIG.1 is an exploded structure diagram of the operating mechanism of the switch apparatus according to the present invention;
FIG.2 is a structure diagram of the operating shaft according to the present invention;
FIG.3 is a structure diagram of the cam according to the present invention showing the third cam surface and the fourth cam surface;
FIG.4 is a structure diagram of the cam according to the present invention showing the first cam surface and the second cam surface;
FIG.5 is a structure diagram of the transmission shaft to the present invention;
FIG.6 is a structure diagram of the operating mechanism of the switch apparatus according to the present invention, which is in a break-contact state;
FIG.7 is a structure diagram of the operating mechanism of the switch apparatus according to the present invention, of which the cam is at a dead-center position;
FIG.8 is a structure diagram of the cam cooperating with the transmission shaft according to the present invention, the cam is at the dead-center position, and the cam needs to continue to rotate through a first angle φ1 toward a first direction D1 before it can contact and cooperate with the transmission shaft;
FIG.9 is a structure diagram of the switch apparatus according to the present invention, which is in a make-contact state;
FIG.10 is a structure diagram of the cam cooperating with the transmission shaft according to the present invention, the cam is at the dead-center position, and the cam needs to continue to rotate through a first angle φ1 toward a second direction D2 before it can contact and cooperate with the transmission shaft.

### DETAILED DESCRIPTION OF THE PREFERRED EMBODIMENTS

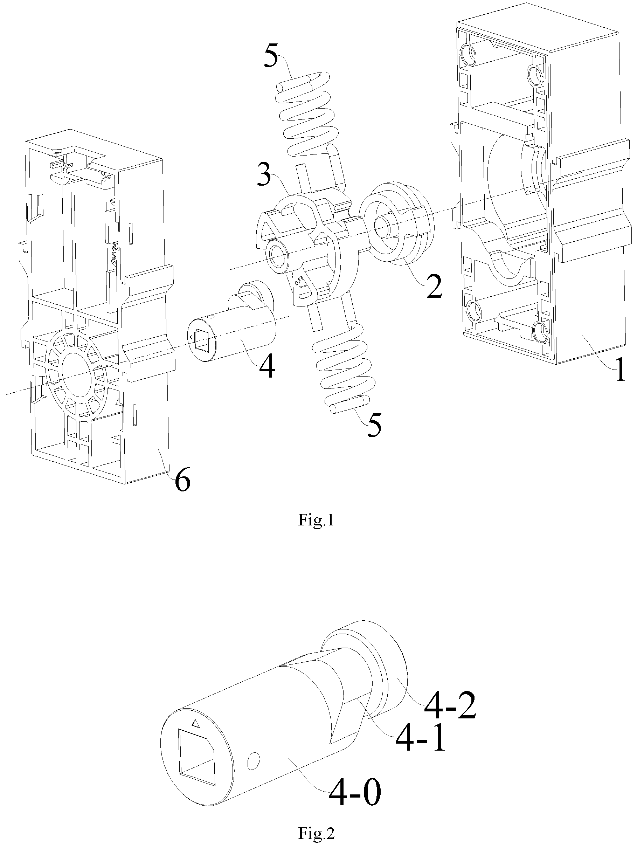

We shall further describe the specific embodiments of the operating mechanism and the switch apparatus of the present invention in combination with the examples given in FIGs.1-10 as follows. The operating mechanism and the switch apparatus according to the present invention are not limited to the description of the following examples.

The switch apparatus according to the present invention is preferably a disconnect switch, which comprises an operating mechanism and a contact system, the contact system comprises a moving contact structure and a stationary contact structure cooperating with each other, the operating mechanism is drivingly connected to the moving contact structure to drive the contact system to connect or disconnect, that is, drive the disconnect switch to make contact or break contact.

As shown in FIGs.1, 6-7 and 9, there is one example of the operating mechanism according to the present invention. The operating mechanism comprises the transmission shaft 2, the cam 3, the operating shaft 4 and the energy-storage spring 5, the transmission shaft 2, the cam 3 and the operating shaft 4 are rotationally arranged respectively, the operating shaft 4 drivingly cooperates with the cam 3 to drive it to rotate, and the energy-storage spring 5 cooperates with the cam 3; the cam 3 rotates to enable the energy-storage spring 5 to store energy, the energy-storage spring 5 stores energy to the maximum value when the cam 3 rotates to the dead-center position, and the energy-storage spring 5 releases energy to drive the cam 3 to rotate after the cam 3 rotates to pass through the dead-center position; the transmission shaft 2 drivingly cooperates with the cam 3 and is used to output the driving force to the moving contact structure of the switch apparatus, so as to enable the switch apparatus to make contact or break contact; a rotational allowance is set between the cam 3 and the transmission shaft 2, so that the transmission shaft 2 remains stationary in the process of the cam 3 rotating to the dead-center position; after the cam 3 rotates to the dead-center position, it continues to rotate through the first angle φ1, so as to contact with the transmission shaft 2 to drive it to rotate, wherein the first angle φ1>0°.

Of the operating mechanism of a switch apparatus according to the present invention the cam rotates by the dead-center position, then it is necessary to continue to rotate through a first angle φ1, so as to contact with the transmission shaft and drive it to rotate, that can effectively accelerate the rotation of the cam in the early stage of the energy-storage spring releasing energy, thereby increasing the rotation speed of the transmission shaft, conducing to an increase in operation speed of break-contact and make-contact and improving the current-carrying capacity of the switch apparatus.

The first angle φ1 is 2°~20°. Further, the first angle φ1 is 2°~10°.

As shown in FIGs. 1, 6-7 and 9, the first free path is provided between the operating shaft 4 and the cam 3; the operating shaft 4 drives the cam 3 to rotate to the dead-center position, and the cam 3 covers the first free path relative to the operating shaft 4 after rotating to pass through the dead-center position. It should be pointed out that the operator can manually operate the operating shaft 4 to rotate or electrically drive the operating shaft 4 to rotate.

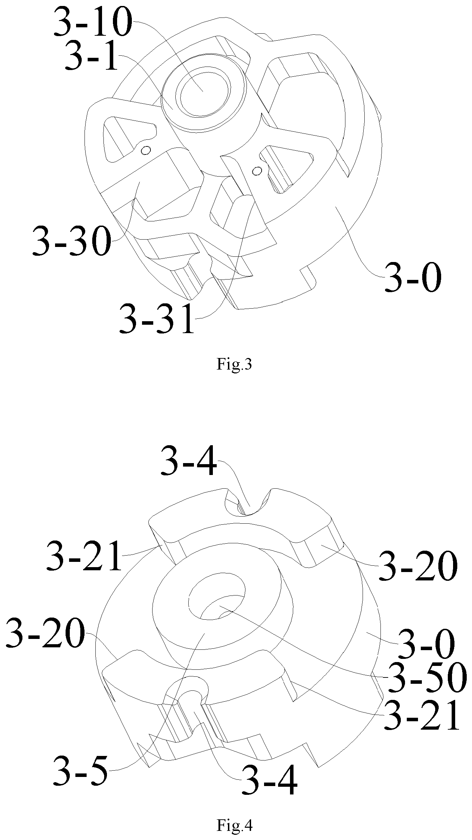

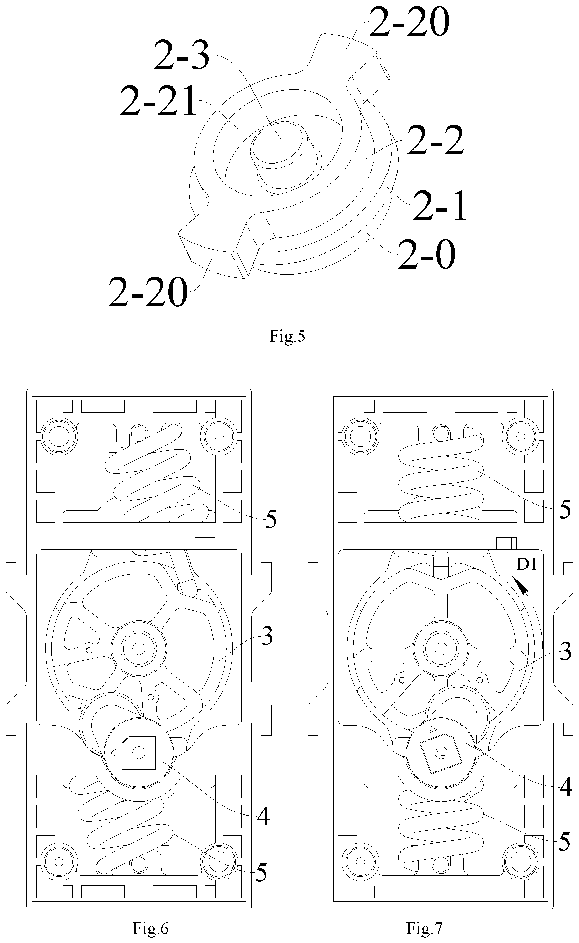

As shown in FIGs. 1, 3 and 5, the cam 3 and the transmission shaft 2 cooperate with each other by means of at least one group of first transmission structures; each group of the first transmission structures comprises a first cooperating portion and a second cooperating portion, the first cooperating portion comprises a first stopping block and a second stopping block arranged at intervals opposite to each other, and the second cooperating portion is arranged between the first stopping block and the second stopping block and cooperates with the first stopping block and the second stopping block respectively; of both the first cooperating portion and the second cooperating portion in each group of the first transmission structures, one is disposed on the cam 3 and the other is disposed on the transmission shaft 2. Further, as shown in FIG.4, the first cooperating portion is disposed on the cam 3, the first stopping block is the first cam face 3-20, the second stopping block is the second cam face 3-21; as shown in FIG.5, the second cooperating portion is disposed on the transmission shaft 2, which is the transmission shaft boss 2-20.

Specifically, as shown in FIG. 1, the rotating axes of the cam 3 and the transmission shaft 2 coincide; as shown in FIG.4, the cam 3 comprises a cam-driving end disposed at one end of its axial direction, and the two radial ends of the cam-driving end are each provided with one first cooperating portion; as shown in FIG.5, the transmission shaft 2 comprises the transmission shaft-cooperated end 2-2 disposed at one end of its axial direction, and the two radial ends of the transmission shaft-cooperated end 2-2 are each provided with one second cooperating portion; the cam-driving end and the transmission shaft-cooperated end 2-2 are arranged opposite each other, and the two first cooperating portions drivingly cooperate with the two second cooperating portions respectively. Further, as shown in FIG.4, the convex ring 3-5 disposed coaxially with the cam 3 is arranged between the two first cooperating portions, and the first axle hole 3-50 is set in the middle of the convex ring 3-5; as shown in FIG.5, the middle of the transmission shaft-cooperated end 2-2 is provided with the transmission shaft-cooperated hole 2-21 set coaxially with the transmission shaft 2, and the middle of the transmission shaft-cooperated hole 2-21 is provided with the transmission shaft post 2-3 coaxially disposed with it; the convex ring 3-5 is rotationally inserted in the transmission shaft-cooperated hole 2-21, and the transmission shaft post 2-3 is rotationally inserted in the first axle hole 3-50. Further, as in FIG.4, the cam 3 comprises two fan-shaped bosses disposed on the cam-driving end, the two fan-shaped bosses are respectively arranged at both radial ends of the cam-driving end, of each fan-shaped boss, one end face is the first cam face 3-20, and the other end face is the second cam face 3-21.

In other embodiments, of the first transmission structure, the first cooperating portion is disposed on the transmission shaft 2, and the second cooperating portion is disposed on the cam 3.

As shown in FIGs. 1-3, 6-7 and 9, the operating shaft 4 and the cam 3 drivingly cooperate with each other by means of the second transmission structure; the second transmission structures comprises a third cooperating portion and a fourth cooperating portion, the third cooperating portion comprises a third stopping block and a fourth stopping block arranged at intervals opposite to each other, and the fourth cooperating portion is arranged between the third stopping block and the fourth stopping block and cooperates with the third stopping block and the fourth stopping block respectively; of both the third cooperating portion and the fourth cooperating portion, one is disposed on the operating shaft 4 and the other is disposed on the cam 3. Further, as shown in FIG.3, the third cooperating portion is disposed on the cam 3, the third stopping block is the third cam face 3-30, the fourth stopping block is the fourth cam face 3-31; as shown in FIGs. 1-2, 6-7 and 9, the fourth cooperating portion is disposed on the operating shaft 4, which is the operating shaft-driving portion 4-2. Further, as shown in FIG.2, the axes of the operating shaft 4 and the cam 3 are arranged at intervals parallel to each other; the operating shaft 4 comprises the operating shaft body 4-0, the operating shaft-driving portion 4-2 is disposed on the operating shaft body 4-0, which is offset toward the cam 3, such structure is conducive to reducing the force to handle the operating shaft 4.

Specifically, as shown in FIG.3, the cam 3 comprises a cam driven end disposed at one end of its axial direction, and the cam-driven end and the cam-driving end are respectively located at both axial ends of the cam 3; the cam-driven end is provided with a V-shaped groove, and the third cam face 3-30 and the fourth cam face 3-31 are a pair of sidewalls of the V-groove. As shown in FIG.2, one axial end of the operating shaft rod body 4-0 is provided with the operating shaft-connecting portion 4-1, and the operating shaft-driving portion 4-2 is a roller disposed on the operating shaft-connecting portion 4-1, which is conducive to reducing the friction between the operating shaft-driving portion 4-2 and the cam 3, and improving the smoothness of action.

In other embodiments, the third cooperating portion is disposed on the operating shaft 4, and the fourth cooperating portion is disposed on the cam 3.

As shown in FIGs.1 and 6-9, the operating mechanism comprises two energy-storage springs 5, and the two energy-storage springs 5 are centrally symmetrically arranged with the rotating axis of the cam 3. Further, as shown in FIGs. 1 and 6-9, one-ends of the two energy-storage springs 5 cooperate with the two radial ends of the cam 3, and the other-ends of the two energy-storage springs 5 are rotationally disposed on the mechanism housing of the operating mechanism.

Specifically, as shown in FIGs.3-4, each of the two radial ends of the cam 3 is provided with one cam cooperated groove 3-4; as shown in FIG.1, the energy-storage spring 5 is a pressure spring, one end of each energy-storage spring 5 is provided with a spring-restricting rod restrictively cooperating with the cam-cooperated groove 3-4, and when the cam 3 is positioned at the dead-center position, the two ends of the energy-storage spring 5 and the rotating axis of the cam 3 are located in the same straight line. After the cam 3 rotates to one-side of the dead-center position, the force of the energy-storage spring 5 applied on the cam 3 drives the cam to rotate toward said one-side, after the cam 3 rotates to the-other-side of the dead-center position, the force of the energy-storage spring 5 applied on the cam 3 drives the cam to rotate toward said the-other-side.

In other embodiments, the energy-storage spring 5 may also be a torsion spring, of which one end cooperates with the cam 3, and the other end is rotationally disposed on the mechanism housing; when the cam 3 is positioned at the dead-center position, the force of the energy-storage spring 5 applied on the cam 3 and the rotating axis of the cam 3 are located in the same straight line.

We shall explain the operation process of the operating mechanism in combination with the figures 6-9 of the description.

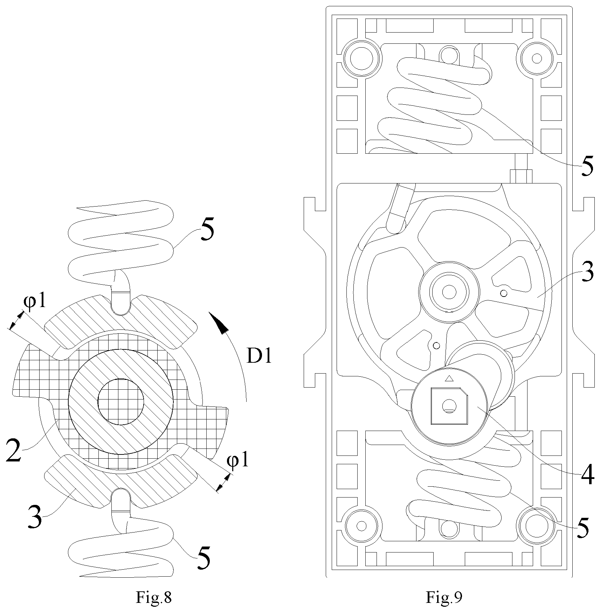

As shown in FIG.6, the operating mechanism is in a break-contact state; referring to FIG.7, when the operating mechanism makes contact, the operating shaft 4 rotates to drive the cam 3 to rotate toward the first direction D1 (as shown in FIG.7, the first direction D1 is preferably counterclockwise) by means of the operating shaft-driving portion 4-2, and the energy-storage spring 5 stores energy with the rotation of the cam 3; as shown in FIGs.7-8, when the cam 3 rotates through a rotation margin relative to the transmission shaft 2 and rotates to the dead-center position, the energy-storage spring 5 stores energy to a maximum value and its geometric axis is in the same straight line with the rotating axis of the cam 3, at this time the cam 3 and the transmission shaft 2 have not yet contacted with each other, and there is still a gap between the first cooperating portion and the second cooperating portion of the cam 3 and the transmission shaft 2; referring to FIG. 8, the cam 3 continues to rotate through the first angle φ1 in the first direction D1 from the dead-center position, so as to contact with the transmission shaft 2 to drive the transmission shaft 2 to rotate; during the cam 3 rotating through the first angle φ1 from the dead-center position, since it has not yet contacted with the transmission shaft 2, the operating shaft 4 and the energy-storage spring 5 release energy to enable the cam 3 to move at a bigger speed, in this way, after the cam 3 contacts with the transmission shaft 2, it drives the transmission shaft 2 to rotate at a bigger speed, thereby driving the switch apparatus to make contact at a bigger speed, such structure prevents fusion welding between the moving contact and the stationary contact of the switch apparatus; the operating mechanism switches to the make-contact state as shown in FIG.9.

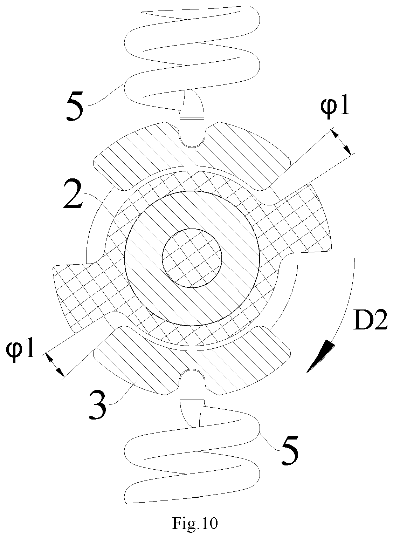

As shown in FIG.9, the operating mechanism is in a make-contact state; referring to FIG. 10, when the operating mechanism breaks contact, the operating shaft 4 rotates to drive the cam 3 to rotate toward the second direction D2 (as shown in FIG. 10, the second direction D2 is preferably clockwise) by means of the operating shaft-driving portion 4-2, the second direction D2 is opposite to the first direction D1, and the energy-storage spring 5 stores energy with the rotation of cam 3; as shown in FIG.10, when the cam 3 rotates through a rotation margin relative to the transmission shaft 2 and rotates to the dead-center position, the energy-storage spring 5 stores energy to a maximum value, and the cam 3 and the transmission shaft 2 have not yet contacted with each other; referring to FIG.10, the cam 3 continues to rotate through the first angle φ1 in the second direction D2 from the dead-center position, so as to contact with the transmission shaft 2 to drive the transmission shaft 2 to rotate, the transmission shaft 2 drives the switch apparatus to switch to the break-contact state shown in FIG.6.

As shown in FIGs.1, 6-7 and 9, the operating mechanism further comprises a mechanism housing, the mechanism housing comprises the housing bottom seat 1 and the housing base 6 oppositely cooperating with each other, the transmission shaft 2 is rotationally disposed on the housing bottom seat 1, the cam 3 is rotationally disposed between the housing base 6 and the transmission shaft 2, the operating shaft 4 is rotationally disposed on the housing base 6; of the energy-storage spring 5, one end is rotationally disposed on the housing bottom seat 1, and the other end cooperates with the cam 3. Further, as shown in FIG.5, the transmission shaft 2 comprises the transmission shaft output end 2-0, the transmission shaft-restricting portion 2-1 and the transmission shaft-cooperated end 2-2, which are connected with each other in proper order, the transmission shaft output end 2-0 is rotationally disposed in the bottom transmission shaft hole set on the housing bottom seat 1 to output the driving force toward the moving contact structure of the switch apparatus, the transmission shaft-restricting portion 2-1 restrictively cooperates with the housing bottom seat 1 to prevent the transmission shaft 2 from coming out of the bottom transmission shaft hole. As shown in FIG. 1, the housing base 6 is provided with a base-operating shaft hole, the operating shaft body 4-1 of the operating shaft 4 is rotationally inserted in the base-operating shaft hole; As shown in FIG.3, the cam-driven end of the cam 3 is provided with the convex shaft 3-1, the middle of the convex shaft 3-1 is provided with the second axle hole 3-10, and the cam 3 cooperates with the housing base 6 through the second axle hole 3-10 and is rotationally disposed on the housing base 6, for example, the housing base 6 is provided with a base shaft that is rotationally inserted into the second axle hole 3-10, or the housing base 6 is provided with a base shaft hole corresponding to the second axle hole 3-10, and both ends of one cam rotating shaft are inserted in the second axle hole 3-10 and the base shaft hole, respectively.

The switch apparatus according to the present invention comprises the operating mechanism, the operating mechanism increases the operation speed of break-contact and make-contact of the switch apparatus, and improves the current-carrying capacity of the switch apparatus.

We have made further detailed description of the present invention mentioned above in combination with specific preferred embodiments, but it is not deemed that the specific embodiments of the present invention is only limited to these descriptions. The scope of protection is defined by the appended claims.

## Claims

1. An operating mechanism of a switch apparatus comprising a transmission shaft (2), a cam (3), an operating shaft (4) and an energy-storage spring (5), the transmission shaft (2), the cam (3) and the operating shaft (4) being respectively rotationally arranged, the operating shaft (4) drivingly cooperating with the cam (3) to drive it to rotate; the cam (3) rotating to enable the energy-storage spring (5) to store energy, the energy-storage spring (5) storing energy to a maximum value at the time of the cam (3) rotating to a dead-center position, and the energy-storage spring (5) releasing energy to drive the cam (3) to rotate after the cam (3) rotating to pass through the dead-center position; the transmission shaft (2) drivingly cooperating with the cam (3) and being used to output a driving force to a moving contact structure of the switch apparatus; a rotational allowance being set between the cam (3) and the transmission shaft (2), so that the transmission shaft (2) remains stationary in a process of the cam (3) rotating to the dead-center position; **characterised in that**:
after the cam (3) rotates to the dead-center position, it continues to rotate through a first angle φ1, so as to contact with the transmission shaft (2) to drive it to rotate, wherein the first angle φ1>0°.

2. The operating mechanism according to claim 1, wherein the first angle φ1 is 2°~20°.

3. The operating mechanism according to claim 2, wherein the first angle φ1 is 2°~10°.

4. The operating mechanism according to claim 1, wherein the cam (3) and the transmission shaft (2) cooperate with each other by means of at least one group of first transmission structures; each group of the first transmission structures comprises a first cooperating portion and a second cooperating portion, the first cooperating portion comprises a first stopping block and a second stopping block arranged at intervals opposite to each other, and the second cooperating portion is arranged between the first stopping block and the second stopping block and cooperates with the first stopping block and the second stopping block, respectively; of both the cooperating portion and the second cooperating portion in each group of the first transmission structures, one is disposed on the cam (3) and another is disposed on the transmission shaft (2).

5. The operating mechanism according to claim 4, wherein the first cooperating portion is disposed on the cam 3, the first stopping block is a first cam face (3-20), the second stopping block is a second cam face (3-21); the second cooperating portion is disposed on the transmission shaft (2), which is a transmission shaft boss (2-20).

6. The operating mechanism according to claim 5, wherein rotating axes of the cam (3) and the transmission shaft (2) coincide; the cam (3) comprises a cam-driving end disposed at one end of its axial direction, and two radial ends of the cam-driving end are each provided with one first cooperating portion; a convex ring (3-5) disposed coaxially with the cam (3) is arranged between the two first cooperating portions, and a first axle hole (3-50) is set in the middle of the convex ring (3-5); the transmission shaft (2) comprises a transmission shaft-cooperated end (2-2) disposed at one end of its axial direction, and two radial ends of the transmission shaft-cooperated end (2-2) are each provided with one second cooperating portion; a middle of the transmission shaft-cooperated end (2-2) is provided with a transmission shaft-cooperated hole (2-21) set coaxially with the transmission shaft (2), and a middle of the transmission shaft-cooperated hole (2-21) is provided with a transmission shaft post (2-3) coaxially disposed with it; the convex ring (3-5) is rotationally inserted in the transmission shaft-cooperated hole (2-21), and the transmission shaft post (2-3) is rotationally inserted in the first axle hole (3-50) and the two first cooperating portions drivingly cooperate with the two second cooperating portions, respectively.

7. The operating mechanism according to claim 1, wherein a first free path is provided between the operating shaft (4) and the cam (3); the operating shaft (4) drives the cam (3) to rotate to the dead-center position, and the cam (3) covers the first free path relative to the operating shaft (4) after rotating to pass through the dead-center position.

8. The operating mechanism according to claim 7, wherein the operating shaft (4) and the cam (3) drivingly cooperate with each other by means of a second transmission structure; the second transmission structures comprises a third cooperating portion and a fourth cooperating portion, the third cooperating portion comprises a third stopping block and a fourth stopping block arranged at intervals opposite to each other, and the fourth cooperating portion is arranged between the third stopping block and the fourth stopping block and cooperates with the third stopping block and the fourth stopping block, respectively; of both the third cooperating portion and the fourth cooperating portion, one is disposed on the operating shaft (4) and the other is disposed on the cam (3).

9. The operating mechanism according to claim 8, wherein the third cooperating portion is disposed on the cam (3), the third stopping block is a third cam face (3-30), the fourth stopping block is a fourth cam face (3-31); the fourth cooperating portion is disposed on the operating shaft (4), which is an operating shaft-driving portion (4-2).

10. The operating mechanism according to claim 9, wherein rotating axes of the operating shaft (4) and the cam (3) is arranged at intervals parallel to each other; the operating shaft (4) comprises an operating shaft body (4-0), the operating shaft-driving portion (4-2) is disposed on the operating shaft body (4-0) and is offset toward the cam (3).

11. The operating mechanism according to claim 7, wherein two axial ends of the cam (3) drivingly cooperate with the operating shaft (4) and the transmission shaft (2), respectively.

12. The operating mechanism according to claim **1,** wherein the operating mechanism comprises two energy-storage springs (5), and the two energy-storage springs (5) are centrally symmetrically arranged with a rotating axis of the cam (3).

13. The operating mechanism according to claim 8, wherein the operating mechanism further comprises a mechanism housing, the mechanism housing comprises a housing bottom seat (1) and a housing base (6) oppositely cooperating with each other, the transmission shaft (2) is rotationally disposed on the housing bottom seat (1), the cam (3) is rotationally disposed between the housing base (6) and the transmission shaft (2); the operating shaft (4) is rotationally disposed on the housing base (6), of the energy-storage spring (5), one end is rotationally disposed on the housing bottom seat (1), and another end cooperates with the cam (3).

14. A switch apparatus comprising the operating mechanism according to any one of claims 1-13.

## Patentansprüche

1. Betätigungsmechanismus einer Schaltvorrichtung, aufweisend eine Übertragungswelle (2), einen Nocken (3), eine Betätigungswelle (4) und eine Energiespeicherfeder (5), wobei die Übertragungswelle (2), der Nocken (3) und die Betätigungswelle (4) jeweils drehbar angeordnet sind, wobei die Betätigungswelle (4) mit dem Nocken (3) antriebsmäßig zusammenwirkt, um ihn zum Drehen anzutreiben; wobei sich der Nocken (3) dreht, um es der Energiespeicherfeder (5) zu ermöglichen, Energie zu speichern, wobei die Energiespeicherfeder (5) Energie speichert bis zu einem Maximalwert in dem Zeitpunkt, wenn sich der Nocken (3) in eine Totpunktposition gedreht hat, und wobei die Energiespeicherfeder (5) Energie freigibt, um den Nocken (3) zum Drehen anzutreiben, nachdem sich der Nocken (3) zum Passieren der Totpunktposition gedreht hat; wobei die Übertragungswelle (2) mit dem Nocken (3) antriebsmäßig zusammenwirkt und dazu dient, eine Antriebskraft auf eine bewegbare Kontaktstruktur der Schaltvorrichtung auszugeben; wobei zwischen dem Nocken (3) und der Übertragungswelle (2) ein Drehspiel eingestellt ist, so dass die Übertragungswelle (2) in einem Vorgang, in dem sich der Nocken (3) in die Totpunktposition dreht, stationär bleibt; **dadurch gekennzeichnet, dass**:
nachdem sich der Nocken (3) in die Totpunktposition gedreht hat, er sich um einen ersten Winkel φ1 weiterdreht, um mit der Übertragungswelle (2) in Kontakt zu kommen, um diese zum Drehen anzutreiben, wobei der erste Winkel φ1>0°.

2. Betätigungsmechanismus gemäß Anspruch 1, wobei der erste Winkel φ1 2°~20° beträgt.

3. Betätigungsmechanismus gemäß Anspruch 2, wobei der erste Winkel φ1 2°~10° beträgt.

4. Betätigungsmechanismus gemäß Anspruch 1, wobei der Nocken (3) und die Übertragungswelle (2) mittels mindestens einer Gruppe erster Übertragungsstrukturen miteinander zusammenwirken; wobei jede Gruppe erster Übertragungsstrukturen einen ersten zusammenwirkenden Abschnitt und einen zweiten zusammenwirkenden Abschnitt aufweist, wobei der erste zusammenwirkende Abschnitt einen ersten Anschlagblock und einen zweiten Anschlagblock aufweist, die in Abständen einander gegenüberliegend angeordnet sind, wobei der zweite zusammenwirkende Abschnitt zwischen dem ersten Anschlagblock und dem zweiten Anschlagblock angeordnet ist und mit dem ersten Anschlagblock bzw. dem zweiten Anschlagblock zusammenwirkt; wobei von dem zusammenwirkenden Abschnitt und dem zweiten zusammenwirkenden Abschnitt in jeder Gruppe erster Übertragungsstrukturen einer an dem Nocken (3) und ein anderer auf der Übertragungswelle (2) angeordnet ist.

5. Betätigungsmechanismus gemäß Anspruch 4, wobei der erste zusammenwirkende Abschnitt an dem Nocken 3 angeordnet ist, wobei der erste Anschlagblock eine erste Nockenfläche (3-20) ist, wobei der zweite Anschlagblock eine zweite Nockenfläche (3-21) ist; wobei der zweite zusammenwirkende Abschnitt, welcher ein Übertragungswellenvorsprung (2-20) ist, auf der Übertragungswelle (2) angeordnet ist.

6. Betätigungsmechanismus gemäß Anspruch 5, wobei die Drehachsen des Nockens (3) und der Übertragungswelle (2) zusammenfallen; wobei der Nocken (3) ein Nockenantriebsende aufweist, das an einem Ende seiner axialen Richtung angeordnet ist, und wobei zwei radiale Enden des Nockenantriebsendes jeweils mit einem ersten zusammenwirkenden Abschnitt versehen sind; wobei ein konvexer Ring (3-5), der koaxial zum Nocken (3) angeordnet ist, zwischen den beiden ersten zusammenwirkenden Abschnitten angeordnet ist und ein erstes Achsenloch (3-50) in der Mitte des konvexen Rings (3-5) vorgesehen ist; wobei die Übertragungswelle (2) ein Übertragungswellenzusammenwirkendes Ende (2-2) aufweist, das an einem Ende ihrer axialen Richtung angeordnet ist, und wobei zwei radiale Enden des Übertragungswellen-zusammenwirkenden Endes (2-2) jeweils mit einem zweiten zusammenwirkenden Abschnitt versehen sind; wobei eine Mitte des Übertragungswellen-zusammenwirkenden Endes (2-2) mit einem Übertragungswellen-zusammenwirkenden Loch (2-21) versehen ist, das koaxial zu der Übertragungswelle (2) vorgesehen ist, und wobei eine Mitte des Übertragungswellen-zusammenwirkenden Lochs (2-21) mit einem koaxial zu diesem angeordneten Übertragungswellenzapfen (2-3) versehen ist; wobei der konvexe Ring (3-5) drehbar in das Übertragungswellenzusammenwirkende Loch (2-21) eingesetzt ist und der Übertragungswellenzapfen (2-3) drehbar in das erste Achsenloch (3-50) eingesetzt ist und die beiden ersten zusammenwirkenden Abschnitte jeweils zugeordnet mit den beiden zweiten zusammenwirkenden Abschnitten antriebsmäßig zusammenwirken.

7. Betätigungsmechanismus gemäß Anspruch 1, wobei ein erster freier Weg zwischen der Betätigungswelle (4) und dem Nocken (3) bereitgestellt ist; wobei die Betätigungswelle (4) den Nocken (3) zum Drehen in die Totpunktposition antreibt und der Nocken (3) den ersten freien Weg relativ zur Betätigungswelle (4) nach dem Drehen zum Passieren der Totpunktposition abdeckt.

8. Betätigungsmechanismus gemäß Anspruch 7, wobei die Betätigungswelle (4) und der Nocken (3) mittels einer zweiten Übertragungsstruktur miteinander antriebsmäßig zusammenwirken; wobei die zweite Übertragungsstruktur einen dritten zusammenwirkenden Abschnitt und einen vierten zusammenwirkenden Abschnitt aufweist, wobei der dritte zusammenwirkende Abschnitt einen dritten Anschlagblock und einen vierten Anschlagblock aufweist, die in Abständen einander gegenüberliegend angeordnet sind, und wobei der vierte zusammenwirkende Abschnitt zwischen dem dritten Anschlagblock und dem vierten Anschlagblock angeordnet ist und mit dem dritten Anschlagblock bzw. dem vierten Anschlagblock zusammenwirkt; wobei von dem dritten zusammenwirkenden Abschnitt und dem vierten zusammenwirkenden Abschnitt einer auf der Betätigungswelle (4) und der andere an dem Nocken (3) angeordnet ist.

9. Betätigungsmechanismus gemäß Anspruch 8, wobei der dritte zusammenwirkende Abschnitt an dem Nocken (3) angeordnet ist, wobei der dritte Anschlagblock eine dritte Nockenfläche (3-30) ist, wobei der vierte Anschlagblock eine vierte Nockenfläche (3-31) ist; wobei der vierte zusammenwirkende Abschnitt, der ein Betätigungswellen-Antriebsabschnitt (4-2) ist, auf der Betätigungswelle (4) angeordnet ist.

10. Betätigungsmechanismus gemäß Anspruch 9, wobei die Drehachsen der Betätigungswelle (4) und des Nockens (3) in Abständen parallel zueinander angeordnet sind; wobei die Betätigungswelle (4) einen Betätigungswellenkörper (4-0) aufweist, wobei der Betätigungswellen-Antriebsabschnitt (4-2) an dem Betätigungswellenkörper (4-0) angeordnet ist und in Richtung zu dem Nocken (3) hin versetzt ist.

11. Betätigungsmechanismus gemäß Anspruch 7, wobei zwei axiale Enden des Nockens (3) jeweils zugeordnet mit der Betätigungswelle (4) und der Übertragungswelle (2) antriebsmäßig zusammenwirken.

12. Betätigungsmechanismus gemäß Anspruch 1, wobei der Betätigungsmechanismus zwei Energiespeicherfedern (5) aufweist, und wobei die beiden Energiespeicherfedern (5) zentralsymmetrisch mit einer Drehachse des Nockens (3) angeordnet sind.

13. Betätigungsmechanismus gemäß Anspruch 8, wobei der Betätigungsmechanismus ferner ein Mechanismusgehäuse aufweist, wobei das Mechanismusgehäuse einen Gehäusebodensitz (1) und eine Gehäusebasis (6) aufweist, die einander gegenüberliegend zusammenwirken, wobei die Übertragungswelle (2) drehbar an dem Gehäusebodensitz (1) angeordnet ist, wobei der Nocken (3) drehbar zwischen der Gehäusebasis (6) und der Übertragungswelle (2) angeordnet ist; wobei die Betätigungswelle (4) drehbar an der Gehäusebasis (6) angeordnet ist, wobei von der Energiespeicherfeder (5) ein Ende drehbar an dem Gehäusebodensitz (1) angeordnet ist und ein anderes Ende mit dem Nocken (3) zusammenwirkt.

14. Schaltvorrichtung, die den Betätigungsmechanismus gemäß irgendeinem der Ansprüche 1-13 aufweist.

## Revendications

1. Mécanisme de commande d'un appareil de commutation comprenant un arbre de transmission (2), une came (3), un arbre de commande (4) et un ressort de stockage d'énergie (5), l'arbre de transmission (2), la came (3) et l'arbre de commande (4) étant respectivement agencés en rotation, l'arbre de commande (4) coopérant en entraînement avec la came (3) pour l'entraîner en rotation ; la came (3) tournant pour permettre au ressort de stockage d'énergie (5) de stocker de l'énergie, le ressort de stockage d'énergie (5) stockant de l'énergie à une valeur maximale lors de la rotation de la came (3) vers une position de point mort, et le ressort de stockage d'énergie (5) libérant de l'énergie pour entraîner la came (3) en rotation après la rotation de la came (3) pour passer par la position de point mort ; l'arbre de transmission (2) coopérant en entraînement avec la came (3) et servant à produire une force d'entraînement à une structure de contact mobile de l'appareil de commutation ; une tolérance de rotation étant définie entre la came (3) et l'arbre de transmission (2), de sorte que l'arbre de transmission (2) reste fixe au cours d'un processus de rotation de la came (3) vers la position de point mort ; **caractérisé en ce que** :
après que la came (3) a tourné vers la position de point mort, elle continue à tourner suivant un premier angle φ1, de manière à entrer en contact avec l'arbre de transmission (2) pour l'entraîner en rotation, dans lequel le premier angle φ1>0°.

2. Mécanisme de commande selon la revendication 1, dans lequel le premier angle φ1 est de 2°~20°.

3. Mécanisme de commande selon la revendication 2, dans lequel le premier angle φ1 est de 2°~10°.

4. Mécanisme de commande selon la revendication 1, dans lequel la came (3) et l'arbre de transmission (2) coopèrent l'un avec l'autre au moyen d'au moins un groupe de premières structures de transmission ; chaque groupe des premières structures de transmission comprend une première partie coopérante et une deuxième partie coopérante, la première partie coopérante comprend un premier bloc d'arrêt et un deuxième bloc d'arrêt agencés à intervalles, en regard l'un de l'autre, et la deuxième partie coopérante est agencée entre le premier bloc d'arrêt et le deuxième bloc d'arrêt et coopère avec le premier bloc d'arrêt et le deuxième bloc d'arrêt, respectivement ; parmi à la fois la partie coopérante et la deuxième partie coopérante, dans chaque groupe des premières structures de transmission, l'une est disposée sur la came (3) et l'autre est disposée sur l'arbre de transmission (2).

5. Mécanisme de commande selon la revendication 4, dans lequel la première partie coopérante est disposée sur la came 3, le premier bloc d'arrêt est une première face (3-20) de came, le deuxième bloc d'arrêt est une deuxième face (3-21) de came ; la deuxième partie coopérante est disposée sur l'arbre de transmission (2), qui est un bossage (2-20) d'arbre de transmission.

6. Mécanisme de commande selon la revendication 5, dans lequel les axes de rotation de la came (3) et de l'arbre de transmission (2) coïncident ; la came (3) comprend une extrémité d'entraînement de came disposée à une extrémité de sa direction axiale, et deux extrémités radiales de l'extrémité d'entraînement de came sont chacune munies d'une première partie coopérante ; une bague convexe (3-5) disposée coaxialement à la came (3) est agencée entre les deux premières parties coopérantes, et un premier trou d'axe (3-50) est placé au milieu de la bague convexe (3-5) ; l'arbre de transmission (2) comprend une extrémité (2-2) coopérant avec l'arbre de transmission disposée à une extrémité de sa direction axiale, et deux extrémités radiales de l'extrémité (2-2) coopérant avec l'arbre de transmission sont chacune munies d'une deuxième partie coopérante ; au milieu de l'extrémité (2-2) coopérant avec l'arbre de transmission est présent un trou (2-21) coopérant avec l'arbre de transmission ménagé coaxialement à l'arbre de transmission (2), et au milieu du trou (2-21) coopérant avec l'arbre de transmission est présent un montant (2-3) d'arbre de transmission disposé coaxialement par rapport à lui ; la bague convexe (3-5) est insérée en rotation dans le trou (2-21) coopérant avec l'arbre de transmission, et le montant (2-3) d'arbre de transmission est inséré en rotation dans le premier trou d'axe (3-50) et les deux premières parties coopérantes coopèrent en entraînement avec les deux deuxièmes parties coopérantes, respectivement.

7. Mécanisme de commande selon la revendication 1, dans lequel un premier chemin libre est ménagé entre l'arbre de commande (4) et la came (3) ; l'arbre de commande (4) entraîne la came (3) en rotation vers la position de point mort, et la came (3) s'étend sur le premier chemin libre par rapport à l'arbre de commande (4) après rotation pour passer par la position de point mort.

8. Mécanisme de commande selon la revendication 7, dans lequel l'arbre de commande (4) et la came (3) coopèrent en entraînement l'un avec l'autre au moyen d'une seconde structure de transmission ; la seconde structure de transmission comprend une troisième partie coopérante et une quatrième partie coopérante, la troisième partie coopérante comprend un troisième bloc d'arrêt et un quatrième bloc d'arrêt agencés à intervalles, en regard l'un de l'autre, et la quatrième partie coopérante est agencée entre le troisième bloc d'arrêt et le quatrième bloc d'arrêt et coopère avec le troisième bloc d'arrêt et le quatrième bloc d'arrêt, respectivement ; parmi à fois la troisième partie coopérante et la quatrième partie coopérante, l'une est disposée sur l'arbre de commande (4) et l'autre est disposée sur la came (3).

9. Mécanisme de commande selon la revendication 8, dans lequel la troisième partie coopérante est disposée sur la came (3), le troisième bloc d'arrêt est une troisième face (3-30) de came, le quatrième bloc d'arrêt est une quatrième face (3-31) de came ; la quatrième partie coopérante est disposée sur l'arbre de commande (4), qui est une partie d'entraînement (4-2) d'arbre de commande.

10. Mécanisme de commande selon la revendication 9, dans lequel les axes de rotation de l'arbre de commande (4) et de la came (3) sont agencés à intervalles parallèlement l'un à l'autre ; l'arbre de commande (4) comprend un corps (4-0) d'arbre de commande, la partie d'entraînement (4-2) d'arbre de commande est disposée sur le corps (4-0) d'arbre de commande et est décalée vers la came (3).

11. Mécanisme de commande selon la revendication 7, dans lequel deux extrémités axiales de la came (3) coopèrent en entraînement avec l'arbre de commande (4) et l'arbre de transmission (2), respectivement.

12. Mécanisme de commande selon la revendication 1, dans lequel le mécanisme de commande comprend deux ressorts de stockage d'énergie (5), et les deux ressorts de stockage d'énergie (5) sont agencés au centre et de manière symétrique par rapport à un axe de rotation de la came (3).

13. Mécanisme de commande selon la revendication 8, dans lequel le mécanisme de commande comprend en outre un logement de mécanisme, le logement de mécanisme comprend un siège inférieur (1) de logement et une base (6) de logement coopérant de manière opposée l'un avec l'autre, l'arbre de transmission (2) est disposé de manière rotative sur le siège inférieur (1) de logement, la came (3) est disposée de manière rotative entre la base (6) de logement et l'arbre de transmission (2) ; l'arbre de commande (4) est disposé de manière rotative sur la base (6) de logement, du ressort de stockage d'énergie (5), une extrémité est disposée de manière rotative sur le siège inférieur (1) de logement, et une autre extrémité coopère avec la came (3).

14. Appareil de commutation, comprenant le mécanisme de commande selon l'une quelconque des revendications 1-13.
